# EUROPEAN PATENT SPECIFICATION

(11) **EP 2 060 539 B1**
(45) Date of publication and mention of the grant of the patent: **11.06.2014**
(21) Application number: 08253738.2
(22) Date of filing: 15.11.2008
(51) Int. Cl.: C02F 1/66, F24H 8/00

(54) **Condensate treatment apparatus**
Kondensatbehandlungsgerät
Appareil de traitement de condensats

(30) Priority: 16.11.2007 GB 0722558
(43) Date of publication of application: 20.05.2009
(73) Proprietor: Scalemaster Limited, Stone, Staffordshire ST15 0SR (GB)
(72) Inventor: Jasper, Carl, Stone Staffordshire ST15 0SR (GB)
(74) Representative: Parnham, Kevin

(56) References cited:
- EP-A- 1 886 975
- DE-A1- 3 711 313
- DE-A1- 19 517 398
- DE-U1- 29 608 311
- JP-A- 2002 035 769
- NL-A- 8 802 828
- US-A- 4 814 074

## Description

The present application relates to condensate treating apparatus and more particularly to such treating apparatus utilised with respect to condensate draining from condensing boilers.

A condensing boiler is a modern high efficiency boiler whereby recuperation of the heat from the hot exhaust gases is used to pre-heat the water or incoming air in the boiler system. At high efficiency the latent heat of evaporation of the exhaust gases is recovered with the water vapour cooled to below the water dew-point resulting in the condensation of liquid which runs back from the flue, through the boiler, to drain. Contaminants in the combustion gas and air precipitate as acids at temperatures above the water dew-point and dissolve in the condensate making it acidic. Typically the condensate comprises sulphuric, nitric and carbonic acid species and is of pH within the range 2.5 to 4.5. Fully condensing boilers typically produce a few litres of condensate per hour whereas under partially condensing conditions the condensate tends to be more acidic but of lower volume.

Condensate with excessive acidity may be harmful to drains, cess-pits and the environment where it is allowed to soak away without treatment.

Acidity of the condensate is commonly neutralised (i.e. has a pH of approximately 7) by passing over chippings or granules of solid alkaline material, such as limestone, as used in soakaways, or passing through cartridges containing said chippings in *in-line* filters fitted in the condensate discharge pipework from boiler to drain.

In view of the above it will be appreciated that use of replaceable cartridges has particular advantages with respect to the exhaust gases taken from boilers. These cartridges can be replaced periodically as required. However, the efficiency of the cartridge simply comprising of an inlet at one end and an outlet at the other end diminishes over time due to the formation of sludge as a result of the interaction between the contaminants and the neutralising agent. In such circumstances, cartridges tend to be prematurely replaced due to constraints on flow rates before all of the neutralising agent has been used.

NL-A-8802 828 discloses a vessel for neutralising acidic condensed water from boilers wherein in use the inlet is located below the outlet. The arrangement is such that solids produced by the interaction of the acidic condensate with the neutralising medium will tend to relatively quickly block the inlet.

US-A-4814074 relates to apparatus for neutralising the pH of household drinking water. The apparatus has an elongated vertical cylindrical tank with a water inlet and outlet at each end. To ensure continued efficacy, the apparatus provides for a backflush of water through the tank which is generally contrary to the typical flow of water through the tank. This helps agitate the neutralising medium, preventing consolidation of solids produced by the interaction of the acidic water and the neutralising medium, thus helping to prevent blockage.

EP-A-1886975 relates to a device for neutralising flue gas condensate. The device comprises a through-flow container in which is arranged a layer of granular neutralising agent. Water enters through one side of the container, flows through the agent and out the other side. To address the problem of the build up of solids as a result of the interaction between the acidic water and the neutralising agent, an agitating fluid is introduced into the container to agitate the neutralising agent layer.

DE 37 11 313 A1 relates to apparatus to neutralise chimmey condensate with a neutralising agent is a container and an outlet above the neutralising agent.

In accordance with the present invention there is provided a condensate neutralising apparatus as claimed in claim 1 below.

Typically, the inserts taper towards the outlet. Possibly, the inserts have a cone shape.

Generally, the apertures are slits or holes. Typically, the slits or holes are of different length or size. Possibly, the apertures are of different length or size whereby the apertures vary in length or size to increase or decrease towards the outlet. Generally, the maximum aperture size is determined in order to retain the neutralising agent.

Typically, the neutralising agent is limestone or other carbonate chippings or calcined dolomite.

Possibly, the housing and the inserts are formed from a suitable plastics material. Generally, the inserts are secured to the housing through an interference fit. Generally, the housing comprises push fittings at each end.

Typically, the housing and the inserts are held in an association whereby the neutralising agent is constrained within the apparatus.

Typically, the housing is transparent to allow observation of the neutralising agent.

Possibly, one or both of the inlet insert and/or the outlet insert are initially covered with a retention sleeve to retain the neutralising agent within the neutralising apparatus. Typically, the retention sleeve comprises a PVA sleeve or EVOH or other water soluble plastic.

Aspects of the present invention will now be described by way of example and reference to the accompany drawings in which: -
Figure 1 is a schematic cross sectional illustration of a condensate neutralising arrangement in accordance with aspects of the present invention prior to effects of condensate contaminants upon neutralising agents;
Figure 2 is a schematic cross section of the apparatus as depicted in the figure 1 when subject to condensate contamination;
Figure 3 provides a perspective view and a side cross sectional view of a first insert in accordance with aspects of the present invention; and,
Figure 4 is an illustration of a perspective view and a side cross section of a second insert in accordance with aspects of the present invention;

The present invention provides a mechanism for the continued neutralisation and flow of treated condensate through a cartridge treatment unit as the neutralising agent progressively turns to sludge due to chemical reaction with the acidic species of the condensate.

According to one aspect of the present invention a neutralising apparatus comprises inserts in the ends of the unit of an elongated design with slits or holes along the body of the insert which allow the flow of liquid even when the majority of the neutralising agent has agglomerated as sludge. The inserts provide a lengthwise access path for the condensate in the apparatus.

According to another aspect of the invention the inserts in the ends of the unit have slits, or holes, of a geometry, sufficiently narrow to retain the chippings or granules of the neutralising agent within the apparatus during handling and transport and prevent the neutralising agent from escaping from the unit under normal operating conditions of condensate fluid flow.

An example of an apparatus unit suitable for the treatment of condensate from a condensing domestic central heating boiler would consist of a plastic tube (cartridge) with a moulded end inserted (elongated at the end nearest to drain) with slits of 1.5mm width or holes of 1.5mm diameter along the length of the body of the insert filled with solid neutralising agent in granular form (such as limestone or other carbonate chippings or proprietary calcined dolomite e.g. Magnodol or Phlocrite) of dimensions in the range 2mm to 6mm. Preferably, the unit is fitted in-line and upright or vertical in the plastic pipework for run through of condensate from boiler to drain. The unit is orientated to utilise gravitational action to stimulate flow.

The apparatus will have a finite lifetime as the neutralising agent will react with the condensate to form sludge. Usually, in accordance with good practice the apparatus will be positioned so that it slopes downwards towards the drain i.e. condensate flows freely to drain or soak-away under gravity. The internal geometry of the elongated end insert allows a significant proportion of the neutralising agent chippings to become sludge whilst still allowing condensate to flow from the insert at the inlet of the apparatus through the remaining granular chippings to the slits or holes on the upper section of the elongated end insert.

Preferably, the apparatus is of a size which allows continued operation with correct function, i.e. neutralisation of condensate, for domestic boilers (up to 45kW input) operated under normal conditions for a period of 12 months after which time it is envisaged that the unit will be replaced. A convenient form of the unit would be an elongate cartridge fitted with simple push-fit fitting at each end to facilitate easy and rapid replacement.

In a preferred embodiment the unit consists of a cartridge with push-fit fittings at each end, with an elongated insert with narrow slits along the length of the body of the insert mechanically held in place at the drain-end of the unit by an interference fit. The cartridge is filled with limestone chippings (or other acid neutralising agent granules) retained by a shorter insert with holes or slits at the boiler inlet, end of the cartridge, again mechanically held in place by geometry with an interference fit. Acidic condensate flows down the plastic pipework from the boiler into the unit through the shorter retaining end insert, is neutralised through reaction with the limestone chippings, and flows out through the slits in the elongated end insert in the unit to the pipework to drain.

Aspects of the present invention relate to the internal geometry of a cartridge containing a neutralising agent used to treat acidic flue gas condensate being discharged from a condensing boiler to drain, so designed as to prevent the unit from becoming blocked due to reaction of the condensate with the neutralising agent resulting in the formation of sludge.

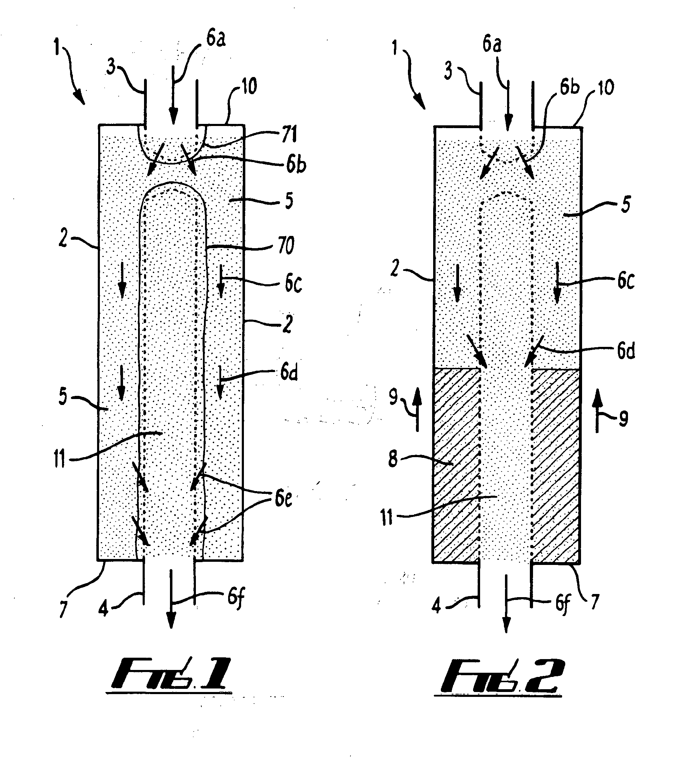

As indicated above sludging can be a problem with respect to blocking efficient operation of condensate neutralising apparatus. By aspects of the present invention and as depicted in figures 1 and 2 it will be understood that a condensate neutralising apparatus 1 comprises a cartridge housing 2 within which an inlet insert 3 and an outlet insert 4 extend. In such circumstances, between the housing 2 and the inserts 3, 4 a volume of neutralising agent 5 as described above is located. The inserts 3, 4 extend into the housing 2 towards each other. In such circumstances, a condensate flow 6 will pass through the inlet insert 3 to be neutralised by the agent 5. Due to the configuration of the apparatus 1 the neutralising agent 5 has an effective lateral access length determined by the potential entry paths for the flow 6 into the outlet insert 4. These entry paths are provided by apertures in the form of slits or apertures.

It will be noted that both the inserts 3 comprise a perforated surface incorporating a number of apertures. These apertures may be holes or slits but in any event are specified in order to retain the neutralising agent 5 within the housing 2 between the inserts 3, 4 and that housing 2. The neutralising agent 5 will be relatively loosely packed but in any event it will be understood that the condensate flow 6 comprises a liquid. It is the liquid which incorporates dissolved contaminants and in particular the cause of acidity which the apparatus 1 is provided to neutralise. In such circumstances through the apertures in the inserts 3 it will be understood that the liquid condensate will be effectively neutralise by reaction with the dehydrated alkaline neutralising agent 5. Generally the neutralising agent 5 will preferentially receive the liquid of the condensate and neutralise the acidity. In such circumstances, as depicted in figure 1 initially upon presentation of the condensate 6 this condensate will generally travel along the neutralising agent 5 towards an outlet end 7 of the housing 2. As indicated this flow will be stimulated by gravity. In such circumstances, the path of the condensate 6 can be shown by the arrowheads 6a to 6f.

By the nature of the neutralising agent 5 progressively as depicted in figure 2 a sludge 8 will be generated by combination of the neutralising agent 5 and contaminants and in particular acidity contaminants in the condensate flow 6. The sludge 8 prevents further egress of flow 6 as well as neutralizing of that flow 6. In such circumstances the sludge 8 will progressively move in the direction of arrowheads 9 towards an inlet end 10 of the housing 2. In prior arrangements generation of the sludge 8 will eventually render the apparatus 1 inoperative. However, with the condensate neutralising apparatus 1 in accordance with aspects of the present invention due to the inserts 3, 4 it will be appreciated that a lateral path into a central core 11 as defined by the outlet insert 4 can continue such that the apparatus 1 remains effectively operational for a much longer period of time. As depicted in figure 2 the flow 6 again extends through the path defined by arrowheads 6a to 6f but rather than flow 6e as depicted in figure 1 being the principal exit through the apertures in the outlet insert 4, flow 6d at an intermediate position within the housing 2 is the principal access to the core 11.

It will be understood that aspects of the present invention include appropriate proportioning of the relative sizing of the inserts 3, 4 and in particular the apertures in those inserts 3, 4. The apertures are specified relative to the neutralising agent and in particular the granular sizes such that as indicated the flow pressure of the condensate 6 generally forces the flow 6 to exit at least initially at position 6e. Initially, the convenience or ease of flow for the condensate 6 is towards movement through the granular nature of the neutralising agent 5 rather than through the apertures in the outlet insert 4. In such circumstances, until impingement with the end 7 the flow 6 will generally pass through the neutralising agent rather than laterally through the apertures in the insert 4 to the core 11. In such circumstances, as indicated the dimensions, configurations and size of apertures will all be chosen dependent upon particular operation requirements and in relation to the neutralising agent 5 used.

Generally, the inserts 3, 4 will be secured through screw fitting to the housing 2. The housing 2 will comprise a cylindrical or otherwise shaped sleeve into which the inserts 3, 4 are secured. Typically, the inserts 3, 4 will comprise scabbard type elements which enter or surround an end of the sleeve of the housing 2 and therefore also define the ends 3, 10 in accordance with aspects of the present invention. Neutralising agent 5 will be packed into the apparatus 1 by initially securing one of the inserts 3, 4 to the housing 2 then locating the neutralising agent 5 within the housing with the other insert then appropriately secured as required. The looseness of packing of the neutralising agent will be dependent upon operational requirements as well as the size of the particles of the neutralising agent selected.

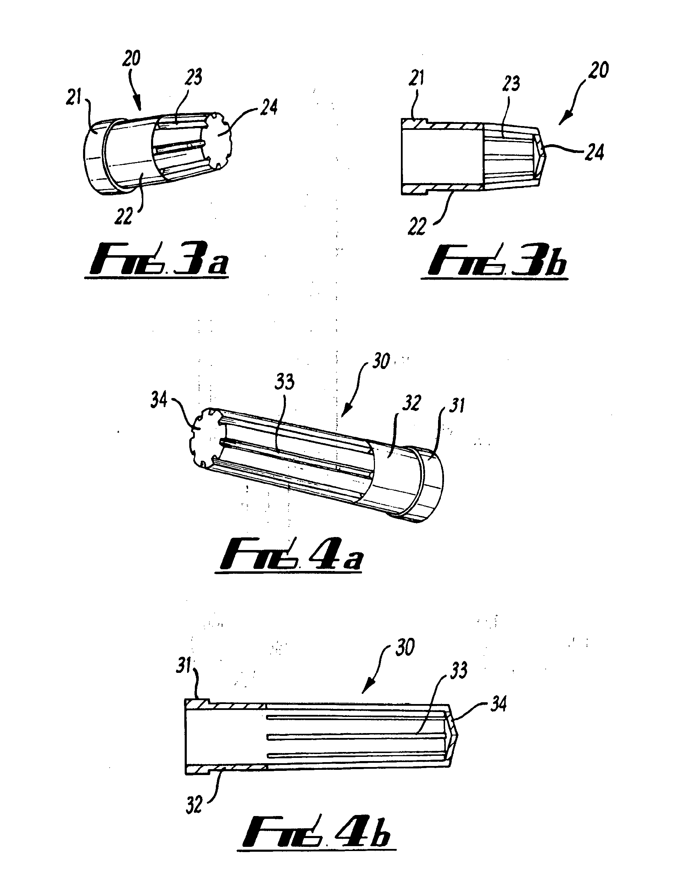

Figure 3 provides a perspective view of an insert 20 in accordance with aspects of the present invention. As can be seen an end 21 provides a cover with an entrant scabbard section 22 to enter a housing (not shown). In such circumstances, the insert 20 can be located in the housing such that apertures 23 are appropriately presented. It will be noted that in the embodiment of the insert 20 depicted in figure 3 an end 24 is substantially closed and therefore a condensate flow will be forced laterally from the insert 20 in use. In such circumstances, this will generate the necessary flows through the apparatus in order to avoid excessive premature entry to an outlet insert and core as depicted in figure 1. The insert 20 depicted in figure 3 will typically be utilised as an inlet insert and has a shorter length than an outlet insert.

Figure 4 illustrates an other insert 30 in accordance with aspects of the present invention. The insert 30 incorporates an end cover 31 with a scabbard part 32 to enter a housing (not shown) in accordance with aspects of the present invention. Slots or slits 33 are provided as apertures extending along a proportion of the length of the insert 30. An end 34 is closed in order as described above with regard to figures 1 to 3 to ensure condensate flow can be appropriately guided or channelled purposely through the neutralising agent in order to achieve the progressive build up of sludge 8 in the direction of arrowheads 9 and a longer operational life for the apparatus.

The apertures 23, 33 in terms of sizing as indicated above will be arranged to retain the neutralising agent in its granular or otherwise form as well as provide appropriate regulation of condensate flow. The apertures as indicated can be slits or slots or holes which may be round or oval. In any event, the apertures 23, 33 will be appropriately dimensioned to achieve the necessary flows of the condensate 6 (figure 1). In such circumstances, the apertures 23, 33 may increase or decrease in size along the length of the inserts 3, 4, 20, 30 dependent upon requirements and regulation of condensate flow.

Normally, the elements, that is to say the housing, along with inserts 3, 4, 20, 30 will be formed from a suitable plastics material to allow disposal and/or recycling.

As indicated above condensate neutralising apparatus in accordance with aspects of the present invention generally comprises a cartridge for locating in the condensate flue or outlet of a boiler. In such circumstances the inlet insert 3 and outlet insert 4 will generally be associated with push fittings or otherwise in order to enable location in that condensate flow path. Alternatively, the apparatus 1 may be secured through a screw thread coupling or otherwise.

Generally, an acidic flue gas condensate 6 leaves the boiler and enters the apparatus via the insert 3 in the end of the cartridge housing 2. The apparatus 1 will be mounted vertically or in a downward inclination from a boiler to a drain. The condensate 6 passes over the surface of the neutralising agent 5 granules and pH is neutralised (becomes approximately pH7) through chemical reaction. The neutralised condensate 6 exits via the slits in the elongated outlet insert 4 in the lower end of the apparatus 1. After prolonged use sludge 8 will collect at the lower end of the apparatus 1. Under this condition treated condensate 6 now exits higher up the slits of the outlet insert 4 thus maintaining fluid flow 6.

It will be appreciated that the neutralising agent in accordance with aspects of the present invention will generally take the form of a powder loosely packed within the inserts. In such circumstances this powder may escape through the apertures in the inserts. In order to avoid such escape, second aspects of the invention in accordance with aspects of the present invention relate to provision of a retention sleeve or barrier to the volume of neutralising agent in the arrangements. In such circumstances with regard to the embodiments described above a retention barrier 70, 71 may be provided for each insert 3, 4. These retention barriers 70, 71 will be formed from a water dissolvable plastic or similar material. Such water dissolvable plastics include PVA and EVOH. In such circumstances once the fluid of the condensate 6 has dissolved the retention barrier 70, 71 as illustrated with regard to figure 2 it will be understood that the barrier will be dispersed to allow the condensate to flow in the direction of arrowheads 6 and therefore the neutralising apparatus to operate.

Modifications and alterations to aspects of the present invention will be understood by those skilled in the art. Thus, as indicated above slits of different sizes and configurations may be utilised in order to further regulate and control condensate through the condensate neutralising apparatus. Additionally, baffle flanges may radiate from the inserts 3, 4 in order to further inhibit direct condensate flow into the core 11 and so provide an incentive for longitudinal flow until sludge 8 builds up forcing lateral flow into the core 11.

## Claims

1. A condensate neutralising apparatus comprising a cartridge housing having an inlet insert at an upper end of the apparatus and an outlet insert at a lower end of the apparatus for a condensate flow with gravity in use, the inlet insert shorter than the outlet insert with the outlet insert extending within the cartridge housing towards the inlet insert,
a neutralising agent located in a neutralising space between the inserts and the housing, the inserts presenting apertures along their length to provide an access length to the neutralising agent and through which condensate can flow stimulated by gravity toward the outlet insert,
the inserts are substantially concentric with the cartridge housing.

2. An apparatus as claimed in claim 1 wherein the inserts taper towards the outlet.

3. An apparatus as claimed in claim 1 or claim 2 wherein the inserts have a cone shape.

4. An apparatus as claimed in any preceding claim wherein the apertures are slits or holes.

5. An apparatus as claimed in claim 4 wherein the slits or holes are of different length or size.

6. An apparatus as claimed in claim 4 claim 5 wherein the apertures are of different length or size whereby the apertures vary in length or size to increase or decrease towards the outlet.

7. An apparatus as claimed in any preceding claim wherein the neutralising agent is limestone or other carbonate chippings or calcined dolomite.

8. An apparatus as claimed in any preceding claim wherein the housing and the inserts are formed from a suitable plastics material.

9. An apparatus as claimed in any preceding claim wherein the housing and the inserts are held in an association whereby the neutralising agent is constrained within the apparatus.

10. An apparatus as claimed in any preceding claim wherein the housing is transparent to allow observation of the neutralising agent.

11. An apparatus as claimed in any preceding claim wherein one or both of the inlet insert and/or the outlet insert are initially covered with a retention sleeve to retain the neutralising agent within the neutralising apparatus.

12. An apparatus as claimed in claim 11 wherein the retention sleeve comprises a PVA sleeve or EVOH or other water soluble plastic.

## Patentansprüche

1. Ein Kondensat Neutralisierungsvorrichtung, die ein Kassettengehäuse mit einer Einlaßeinsatz an einem oberen Ende der Vorrichtung und einen Steckdoseneinsatz an einem unteren Ende der Vorrichtung für einen Kondensatstrom mit der Schwerkraft verwendet wird, die kürzer ist als die Einlassdoseneinsatzmit die Steckdose stecken einfügen der sich innerhalb des Kassettengehäuses in Richtung der Einlaßeinsatz, ein Neutralisierungsmittel in einer neutralisierenden Raum zwischen den Einsätzen und dem Gehäuse angeordnet ist, können die Einsätze präsentiert Öffnungen entlang ihrer Länge , um einen Zugang zu der Länge -und Neutralisationsmittel , durch die Kondensat bereitzustellen stimuliert fließen durch Schwerkraft in Richtung der Doseneinsatz , sind die Einsätze im wesentlichen konzentrisch mit dem Kassettengehäuse .

2. Vorrichtung nach Anspruch 1, wobei die Einsätze in Richtung des Auslasses verjüngt.

3. Vorrichtung nach Anspruch 1 oder Anspruch 2, wobei die Einsätze eine Kegelform .

4. Vorrichtung nach einem der vorhergehenden Ansprüche, wobei die Öffnungen Schlitze oder Löcher aufweist.

5. Vorrichtung nach Anspruch 4, wobei die Schlitze oder Löcher unterschiedlicher Länge oder Größe.

6. Vorrichtung nach Anspruch 4 oder Anspruch 5 , wobei die Öffnungen von unterschiedlicher Länge oder Größe , wobei die Öffnungen von unterschiedlicher Länge oder Größe zu erhöhen oder zu verringern in Richtung des Auslasses aufweist.

7. Vorrichtung nach einem der vorhergehenden Ansprüche, wobei das Neutralisationsmittel Kalkstein oder anderen kohlen Splitt oder kalziniertem Dolomit ist.

8. Vorrichtung nach einem der vorhergehenden Ansprüche, wobei das Gehäuse und die Einsätze sind aus einem geeigneten Kunststoffmaterial gebildet ist.

9. Vorrichtung nach einem der vorhergehenden Ansprüche, wobei das Gehäuse und die Einsätze in einem Verband , wobei das Neutralisationsmittel wird in der Vorrichtung begrenzt gehalten wird.

10. Vorrichtung nach einem der vorhergehenden Ansprüche , wobei das Gehäuse transparent ist, um die Beobachtung des Neutralisationsmittels lassen wird.

11. Vorrichtung nach einem der vorhergehenden Ansprüche , wobei eine oder beide von der Einlasseinsatz und / oder die Steckdose zu stecken zunächst mit einer Stützhülse , um die Neutralisationsmittel in der Neutralisierungsvorrichtungbeibehalten bedeckt ist.

12. Vorrichtung nach Anspruch 11, wobei die Haltehülse einen PVA Hülse oder EVOH oder anderen wasserlöslichen Kunststoff ist.

## Revendications

1. Dispositif de neutralisation de condensat comprenant un boîtier de cartouche ayant un insert d' entrée au niveau d' une extrémité supérieure de l'appareil et d'un insert de sortie à une extrémité inférieure de l'appareil pour un écoulement de condensat de gravité en cours d'utilisation , l'orifice d'entrée d'insérer plus courte que la sortie insérer avec la sortie insérer s'étendant à l'intérieur du logement de cartouche vers l'insert d'admission , un agent de neutralisation situé dans un espace de neutralisation entre les inserts et le boîtier , les inserts présentant des ouvertures le long de sa longueur pour fournir une longueur de l'accès à l'agent de neutralisation et à travers lequel le condensat peut s'écouler stimulée par gravité vers la sortie de l'insert , les inserts sont sensiblement concentrique avec le boîtier de cartouche .

2. Un appareil tel que revendiqué dans la revendication 1, dans lequel les inserts se rétrécissent en direction de la sortie .

3. Un appareil tel que revendiqué dans la revendication 1 ou la revendication 2, dans lequel les inserts ont une forme de cône.

4. Appareil selon l'une quelconque des revendications précédentes, dans lequel les ouvertures sont des fentes ou des trous .

5. Un appareil tel que revendiqué dans la revendication 4, dans lequel les fentes ou les trous sont de longueur ou de taille différentes.

6. Un appareil tel que revendiqué dans la revendication 4 ou la revendication 5, dans lequel les ouvertures sont de longueur ou de taille différente de sorte que les ouvertures varient en longueur ou taille pour augmenter ou diminuer vers la sortie .

7. Appareil selon l'une quelconque des revendications précédentes , dans lequel l'agent de neutralisation est le calcaire ou autres gravillons de carbonate ou de la dolomite calcinée.

8. Appareil selon l'une quelconque des revendications précédentes, dans lequel le boîtier et les inserts sont formés à partir d' une matière plastique appropriée .

9. Appareil selon l'une quelconque des revendications précédentes, dans lequel le boîtier et les inserts sont maintenus dans une liaison de sorte que l'agent neutralisant est contraint à l'intérieur de l'appareil.

10. Appareil selon l'une quelconque des revendications précédentes, dans lequel le boîtier est transparent pour permettre l'observation de l'agent de neutralisation .

11. Appareil selon l'une quelconque des revendications précédentes, dans lequel l'un ou les deux de l'insert d' entrée et / ou de l'insert de prise de courant sont initialement recouverte d' un manchon de rétention pour retenir l'agent de neutralisation à l'intérieur de l'appareil de neutralisation .

12. Appareil selon la revendication 11, dans lequel le manchon de retenue comprend un manchon en matière plastique ou PVA soluble dans l'eau ou d'un autre EVOH .
